# EUROPEAN PATENT SPECIFICATION

(11) **EP 3 884 749 B1**
(45) Date of publication and mention of the grant of the patent: **03.01.2024**
(21) Application number: 18940817.2
(22) Date of filing: 20.11.2018
(51) Int. Cl.: A01B 69/00, A01D 34/00, G05D 1/02

(54) **AUTONOMOUS WORK MACHINE, AUTONOMOUS WORK MACHINE CONTROL METHOD, AND PROGRAM**
AUTONOME ARBEITSMASCHINE, STEUERUNGSVERFAHREN FÜR AUTONOME ARBEITSMASCHINEN UND PROGRAMM
MACHINE DE TRAVAIL AUTONOME, PROCÉDÉ DE COMMANDE DE MACHINE DE TRAVAIL AUTONOME ET PROGRAMME

(43) Date of publication of application: 29.09.2021
(73) Proprietor: HONDA MOTOR CO., LTD., Minato-ku Tokyo 107-8556 (JP)
(72) Inventor: TAKAHASHI, Hiroto, Wako-shi, Saitama 351-0193 (JP); YAMAMURA, Makoto, Wako-shi, Saitama 351-0193 (JP); UDAGAWA, Takamasa, Wako-shi, Saitama 351-0193 (JP)
(74) Representative: Beder, Jens
(86) International application number: PCT/JP2018/042853
(87) International publication number: WO 2020/105125

(56) References cited:
- WO-A1-2015/119266
- WO-A1-2015/147111
- WO-A1-2015/147150
- WO-A1-2016/178294
- JP-A- H10 103 966
- JP-A- 2007 156 576
- JP-A- 2007 156 576
- JP-A- 2007 156 689
- JP-A- 2008 033 759
- JP-A- 2016 186 749
- JP-A- 2016 212 697
- JP-A- 2017 120 551
- US-A- 4 211 921
- US-A1- 2017 269 603
- US-A1- 2017 322 559
- US-A1- 2018 255 704

## Description

### TECHNICAL FIELD

The present invention relates to an autonomous work machine, a control method of the autonomous work machine, and a program.

### BACKGROUND ART

There is conventionally known an autonomous work machine that defines a working area using a plurality of markers and performs a work in the defined working area.

Japanese Patent Laid-Open No. 2017-158532 discloses a weeding apparatus that extracts, from a captured image, images of markers set in advance at predetermined positions in a working area, obtains a current position based on the extracted marker images, and performs autonomous traveling according to a working line.

US 4 211 921 A1 discloses an autonomous work machine that performs a work in a working area defined by a marker (the boundary line), comprising a camera, detection means for detecting the marker from a captured image of the camera; and control means for , if the marker deviates from a detection range of the detection means, controlling a traveling direction of the autonomous work machine.

US 2017/269603 A1 discloses an autonomous work machine according to the preamble of claim 1, configured to detect a plurality of markers defining a working area by a camera.

### SUMMARY OF INVENTION

### TECHNICAL PROBLEM

However, if the autonomous work machine travels toward between markers, the autonomous work machine may deviate out of the working area defined by the markers. If the autonomous work machine passes between markers and deviates out of the working area, it may cause an accident by, for example, submerging in a pond existing outside the working area.

It is an object of the present invention to provide a technique for making it possible to continue a work without causing an autonomous work machine to deviate out of a working area.

### SOLUTION TO PROBLEM

In order to solve the above-described problem and achieve the object, according to the present invention, there is provided an autonomous work machine and a control method according to the appended claims.

### ADVANTAGEOUS EFFECTS OF INVENTION

According to the present invention, it is possible to continue a work without causing an autonomous work machine to deviate out of a working area.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing the outer appearance of an autonomous work machine capable of autonomous traveling according to an embodiment of the present invention;
Fig. 2 is a view observing the autonomous work machine according to the embodiment of the present invention sideways;
Fig. 3 is a block diagram showing the input/output relationship of an electronic control unit (ECU) that controls the autonomous work machine according to the embodiment of the present invention;
Fig. 4 is a flowchart showing a processing procedure executed by the autonomous work machine according to the first embodiment;
Fig. 5 is a flowchart showing a processing procedure executed by an autonomous work machine according to the second embodiment;
Fig. 6 is a view showing an example of an operation in a working area according to the embodiment of the present invention;
Fig. 7 is a view showing an example of another operation in a working area according to the embodiment of the present invention;
Fig. 8 is a view showing an example of still another operation in a working area according to the embodiment of the present invention;
Fig. 9 is a view showing an example of analysis of a captured image according to the embodiment of the present invention; and
Fig. 10 is a view showing an example of still another operation in a working area according to the embodiment of the present invention.

### DESCRIPTION OF EMBODIMENTS

Hereinafter, the embodiments of the present invention will be described with reference to the accompanying drawings. It should be noted that the same reference numerals denote the same constituent elements throughout the drawings.

### (First Embodiment)

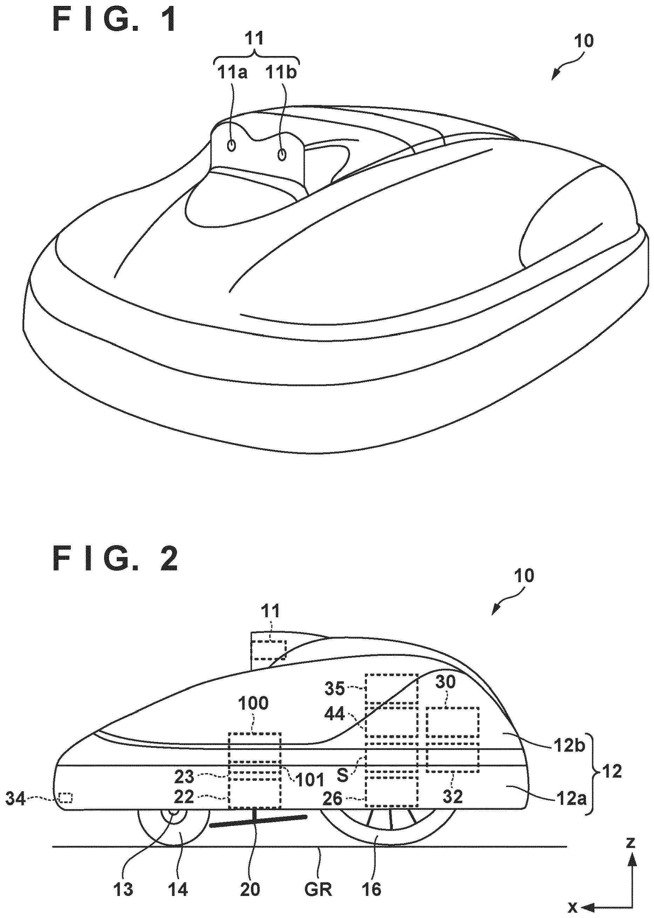

Fig. 1 is a view showing the outer appearance of an autonomous work machine capable of autonomous traveling according to an embodiment of the present invention. In the following description, the traveling direction (vehicle longitudinal direction) of the work machine in a side view, a lateral direction (vehicle width direction) perpendicular to the traveling direction, and a perpendicular direction perpendicular to the traveling direction and the lateral direction are respectively defined as a front-and-rear direction, a left-and-right direction, and a vertical direction, and the arrangement of each component will be explained in accordance with these directions.

In Fig. 1, reference numeral 10 denotes a work machine (to be referred to as "a working vehicle" hereinafter). More specifically, the working vehicle 10 functions as an autonomous traveling lawn mower. However, the lawn mower is merely an example, and the present invention is also applicable to other types of work machines (for example, a snow remover, a mower, a carrying vehicle, a cultivator, and the like). The working vehicle 10 has a camera unit 11 including a plurality of cameras (a first camera 11a and a second camera 1 1b), and can calculate and obtain information of the distance between the working vehicle 10 and an object existing in front of the working vehicle 10 by using images captured by the first and second cameras 11a and 11b having a parallax. The working vehicle 10 controls the operation of the working vehicle 10 based on the distance information up to the object.

Fig. 2 is a view observing the working vehicle 10 in the lateral direction (vehicle width direction). As shown in Fig. 2, the working vehicle 10 includes the camera unit 11, a vehicle body 12, a stay 13, front wheels 14, rear wheels 16, a blade 20, a working motor 22, a motor holding member 23, a blade height adjusting motor 100, and a translation mechanism 101. The working vehicle 10 also includes traveling motors 26, various sensors S, an ECU (Electronic Control Unit) 44, a charging unit 30, a battery 32, a charging terminal 34, and a notification unit 35.

The vehicle body 12 of the working vehicle 10 includes a chassis 12a and a frame 12b attached to the chassis 12a. The front wheels 14 are two, left and right small-diameter wheels fixed to the front part of the chassis 12a via the stay 13. The rear wheels 16 are two, left and right large-diameter wheels attached to the rear part of the chassis 12a.

The blade 20 is a lawn mowing rotary blade attached near the central position of the chassis 12a. The working motor 22 is an electric motor arranged above the blade 20. The blade 20 is connected to and rotated by the working motor 22. The motor holding member 23 holds the working motor 22. The rotation of the motor holding member 23 is regulated with respect to the chassis 12a. In addition, the vertical movement of the motor holding member 23 is permitted by a combination of a guide rail and a slider capable of vertically moving by being guided by the guide rail.

The blade height adjusting motor 100 is a motor for adjusting the height of the blade 20 in the vertical direction from a ground surface GR. The translation mechanism 101 is connected to the blade height adjusting motor 100, and converts the rotation of the blade height adjusting motor 100 into a vertical translational movement. The translation mechanism 101 is also connected to the motor holding member 23 for holding the working motor 22.

The rotation of the blade height adjusting motor 100 is converted into the translational movement (vertical movement) by the translation mechanism 101, and this translational movement is transmitted to the motor holding member 23. The translational movement (vertical movement) of the motor holding member 23 causes the working motor 22 held by the motor holding member 23 to translationally move (vertically move). The height of the blade 20 from the ground surface GR can be adjusted by the vertical movement of the working motor 22.

The traveling motors 26 are two electric motors (motors) attached to the chassis 12a of the working vehicle 10. The two electric motors are connected to the left and right rear wheels 16. The left and right wheels are independently rotated forward (rotated in an advancing direction) or rotated backward (rotated in a retreating direction) by using the front wheels 14 as driven wheels and the rear wheels 16 as driving wheels. This allows the working vehicle 10 to move in various directions.

The charging terminal 34 is a charging terminal installed in the front end position of the frame 12b in the front-and-rear direction. The charging terminal 34 can receive power from a charging station (not shown) when connected to a corresponding terminal of the charging station. The charging terminal 34 is connected to the charging unit 30 by a line, and the charging unit 30 is connected to the battery 32. The working motor 22, the traveling motors 26, and the blade height adjusting motor 100 are also connected to the battery 32, and receive power from the battery 32.

The ECU 44 is an electronic control unit including a microcomputer formed on a circuit board, and controls the operation of the working vehicle 10. Details of the ECU 44 will be described later. If an abnormality occurs in the working vehicle 10, the notification unit 35 notifies the user of the occurrence of the abnormality. For example, a notification is made by a voice or display. Alternatively, the notification unit 35 outputs the abnormality occurrence to an external device connected to the working vehicle 10 by a wire or wirelessly. The user can know the occurrence of the abnormality via the external device.

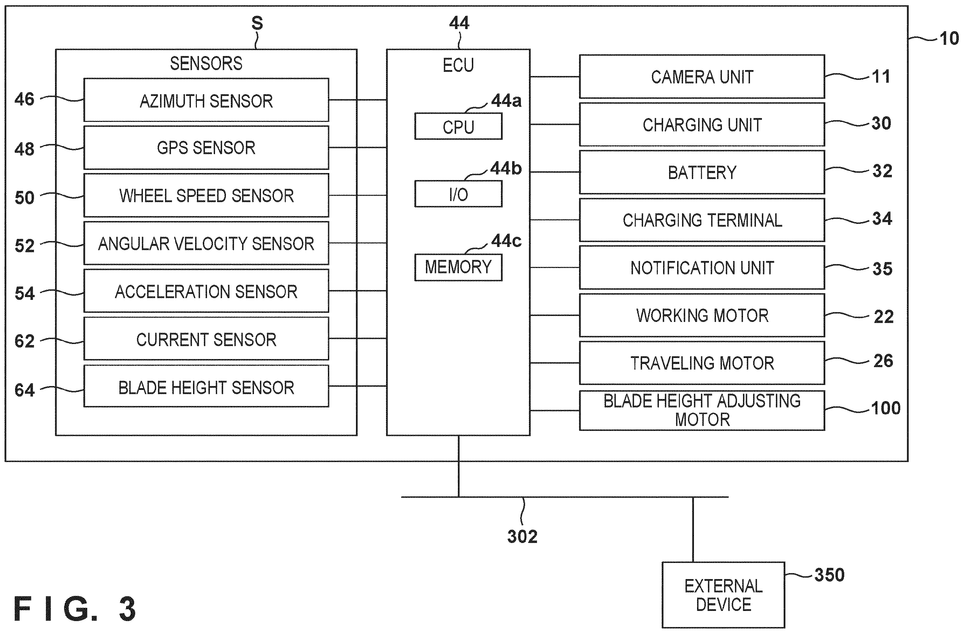

Fig. 3 is a block diagram showing the input/output relationship of the electronic control unit (ECU) that controls the working vehicle 10. As shown in Fig. 3, the ECU 44 includes a CPU 44a, an I/O 44b, and a memory 44c. The memory 44c is, for example, a ROM (Read Only Memory), an EEPROM (Electrically Erasable Programmable Read Only Memory), or a RAM (Random Access Memory). The memory 44c stores the working schedule of the working vehicle 10, information on the working area, and various programs for controlling the operation of the working vehicle 10. The ECU 44 can operate as each processing unit for implementing the present invention by reading out and executing a program stored in the memory 44c.

The ECU 44 is connected to the various sensors S. The sensors S include an azimuth sensor 46, a GPS (Global Positioning System) sensor 48, a wheel speed sensor 50, an angular velocity sensor 52, an acceleration sensor 54, a current sensor 62, and a blade height sensor 64.

The azimuth sensor 46 and the GPS sensor 48 are sensors for obtaining information of the direction and the position of the working vehicle 10. The azimuth sensor 46 detects the azimuth corresponding to the terrestrial magnetism. The GPS sensor 48 receives radio waves from GPS satellites and detects information indicating the current position (the latitude and the longitude) of the working vehicle 10. Note that concerning estimation of the current position, the method is not limited to use of the GPS. The current position may be obtained by an arbitrary satellite positioning system such as a GNSS (Global Navigation Satellite System). The current position may be obtained based on an image capturing result of a camera.

The wheel speed sensor 50, the angular velocity sensor 52, and the acceleration sensor 54 are sensors for obtaining information on the moving state of the working vehicle 10. The wheel speed sensor 50 detects the wheel speeds of the left and right wheels 16. The angular velocity sensor 52 detects the angular velocity around the vertical axis (the z-axis in the perpendicular direction) in the barycentric position of the working vehicle 10. The acceleration sensor 54 detects accelerations in the directions of three perpendicular axes, that is, the x-, y-, and z-axes, which act on the working vehicle 10.

The current sensor 62 detects the current consumption (power consumption) of the battery 32. The detection result of the current consumption (power consumption) is saved in the memory 44c of the ECU 44. When a predetermined power amount is consumed and the power amount stored in the battery 32 becomes equal to or lower than a threshold value, the ECU 44 performs control for returning the working vehicle 10 to the charging station (not shown) in order to charge the working vehicle 10.

The blade height sensor 64 detects the height of the blade 20 from the ground surface GR. The blade height sensor 64 outputs the detection result to the ECU 44. Under the control of the ECU 44, the blade height adjusting motor 100 is driven, and the blade 20 vertically moves, thereby adjusting the height from the ground surface GR.

The outputs from the various sensors S are input to the ECU 44 via the I/O 44b. Based on the outputs from the various sensors S, the ECU 44 supplies power from the battery 32 to the traveling motor 26, the working motor 22, and the height adjusting motor 100. The ECU 44 controls the traveling motor 26 by outputting a control value via the I/O 44b, thereby controlling traveling of the working vehicle 10. The ECU 44 also controls the height adjusting motor 100 by outputting a control value via the I/O 44b, thereby controlling the height of the blade 20. Furthermore, the ECU 44 controls the working motor 22 by outputting a control value via the I/O 44b, thereby controlling the rotation of the blade 20. The I/O 44b can function as a communication interface, and can be connected to an external device (for example, a communication device such as a smartphone or a personal computer) 350 via a network 302 by a wire or wirelessly.

### <Processing>

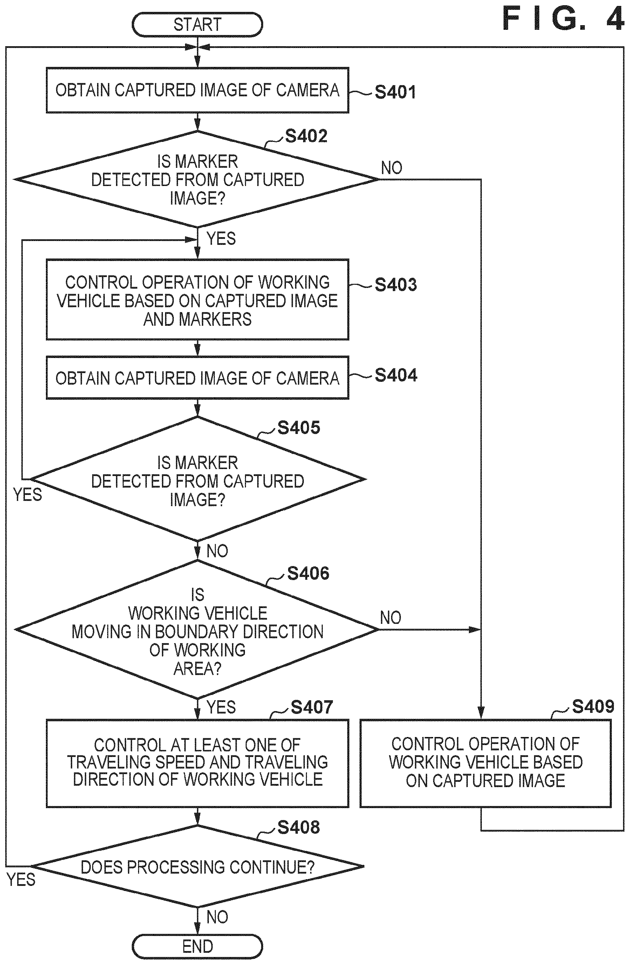

The procedure of processing executed by the working vehicle 10 according to this embodiment will be described next with reference to the flowchart of Fig. 4. In step S401, the ECU 44 obtains a captured image captured by the camera unit 11.

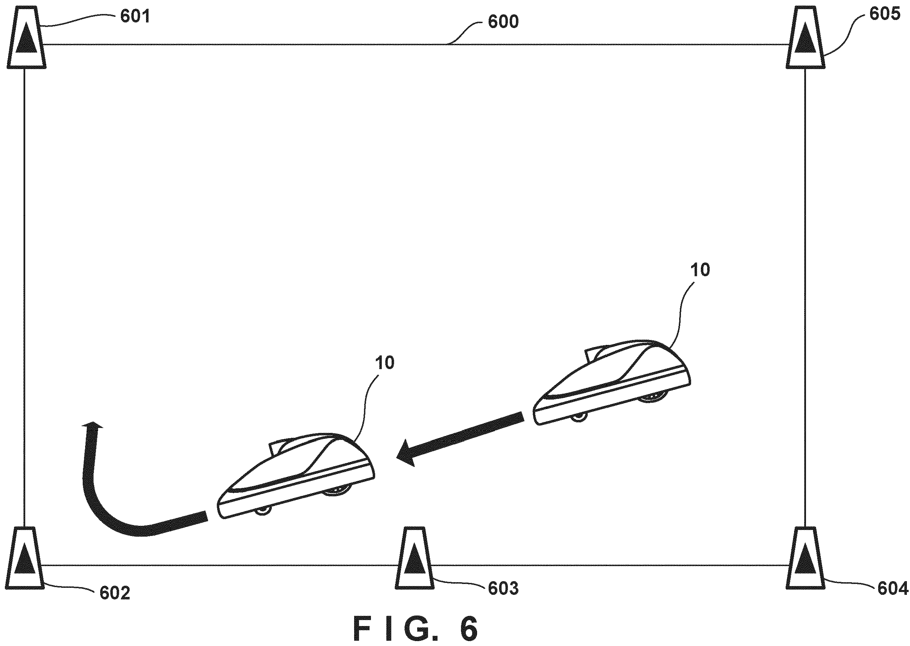

In step S402, the ECU 44 detects a marker from the captured image. Here, the marker is a mark arranged in a working area in advance to define the working area where the working vehicle 10 performs a work. For example, Fig. 6 is a view showing a state of the working vehicle 10 that performs a work in a working area defined by a plurality of markers. Reference numeral 600 denotes a working area; and 601 to 605, markers. The boundary of the working area 600 is defined by the plurality of markers 601 to 605, and the working area 600 is thus defined. Note that the markers do not only define the outer periphery of the working area. If an obstacle such as a large tree or rock exists in the working area, a plurality of markers can be arranged around that to exclude the obstacle from the working area. If markers are detected, the process advances to step S403. On the other hand, if no marker is detected, the process advances to step S409.

In step S403, the ECU 44 controls the operation of the working vehicle 10 based on the captured image and the markers. The ECU 44 can calculate and obtain distance information between the working vehicle 10 and a marker existing in front of the working vehicle 10 based on a plurality of captured images captured by the camera unit 11. The ECU 44 controls the operation of the working vehicle 10 based on the distance information up to the marker. At this time, the ECU 44 sets a virtual wire between the detected markers. The ECU 44 recognizes the set virtual wire as the boundary of the working area and controls the operation (for example, at least one of the traveling speed and the traveling direction) of the working vehicle 10 so that the working vehicle does not deviate out of the working area across the virtual wire. This enables more precise control because an operation such as a turn can be performed without deviating from the virtual wire while the markers are being detected.

In step S404, the ECU 44 obtains a captured image captured by the camera unit 11. In step S405, the ECU 44 detects markers from the captured image obtained in step S404. If markers are detected, the process returns to step S403. On the other hand, if no marker is detected (that is, if markers deviate from the detection range), the process advances to step S406.

In step S405, for example, if a plurality of markers are detected from the captured image of the preceding frame, the process may advance to step S406 in a case in which all the plurality of markers are not detected from the captured image any more (in a case in which the markers deviate from the detection range).

Alternatively, in step S405, if a plurality of markers are detected from the captured image of the preceding frame, the process may advance to step S406 in a case in which at least one of the plurality of markers is not detected from the captured image of the current frame any more (in a case in which the marker deviates from the detection range). If two markers are detected from the captured image of the preceding frame, the process may advance to step S406 in a case in which one of the two markers is not detected from the captured image of the current frame any more (in a case in which the marker deviates from the detection range). In the example shown in Fig. 6, the working vehicle 10 moves from the right side to the left side in the working area 600. If the working vehicle is located on the right side, the two markers 602 and 603 are detected. When the working vehicle moves in the lower left direction, the marker 603 is not detected any more, and only the marker 602 is detected. In this case, the working vehicle 10 may deviate from the boundary defined by the line that connects the marker 602 and the marker 603. Hence, to avoid the deviation, the process advances to step S406.

Alternatively, in step S405, if a marker detected in the captured image of the preceding frame is not recognized as a marker in the captured image of the current frame, the process may advance to step S406. This corresponds to a case in which, for example, the working vehicle 10 approaches a marker too much, and a marker included in a captured image cannot be recognized as a marker any more.

In step S406, the ECU 44 determines whether the working vehicle 10 is moving in the boundary direction of the working area. In the example shown in Fig. 6, the working vehicle 10 is moving in the direction of the boundary (for example, the line that connects the markers 601 and 602 or the line that connects the markers 602 and 603) of the working area 600. For example, the size of each marker detected in each of the continuously obtained captured images of preceding frames is recorded. If the sizes of the markers detected from the captured image become large stepwise, and the markers are detected in a predetermined size or more, it can be determined that the working vehicle 10 is moving in the boundary direction. Alternatively, the increase speed of the size of each marker detected from the captured image is measured. If the increase speed is a predetermined increase speed or more, it may be determined that the working vehicle 10 is moving in the boundary direction. This is because when the distance from a marker is long, the size of the marker detected at the distance does not largely change between captured images, but the size of a marker detected at a close position largely changes between captured images in a small movement. Upon determining that the working vehicle 10 is moving in the boundary direction, the process advances to step S407. On the other hand, upon determining that the working vehicle 10 is not moving in the boundary direction (for example, if the working vehicle 10 is traveling to near the center of the working area 600), the process advances to step S409.

In step S407, the ECU 44 controls at least one of the traveling speed and the traveling direction of the working vehicle 10. For example, the traveling speed of the working vehicle 10 is reduced from the current traveling speed, and/or the working vehicle 10 is turned to change the traveling direction. For example, the working vehicle 10 is turned to one of the left and right sides such that the direction becomes 90° with respect to the current traveling direction. Alternatively, the working vehicle 10 may be turned to one of the left and right sides such that the direction becomes 180° with respect to the current traveling direction. That is, the working vehicle 10 may be turned such that it travels in a direction opposite to the current traveling direction. Note that the angle is not limited to 90° to 180°, and may be an arbitrary angle. The angle may be selected and decided from the range of, for example, 45° to 180°. Alternatively, the working vehicle 10 may temporarily stop and then retreat in a direction opposite to the traveling direction.

In the example shown in Fig. 6, the working vehicle 10 may turn in the right direction with respect to the current traveling direction in the direction of separating from the line that connects the marker 602 and the marker 603. At this time, the traveling speed may also be reduced. This can prevent the working vehicle 10 from deviating from the boundary of the working area and moving out.

However, the working vehicle 10 need not always turned in the direction of separating from the boundary. The working vehicle 10 may turn in the direction of approaching the boundary if it does not deviate from the boundary no matter which direction it turns to the left or right with respect to the current traveling direction.

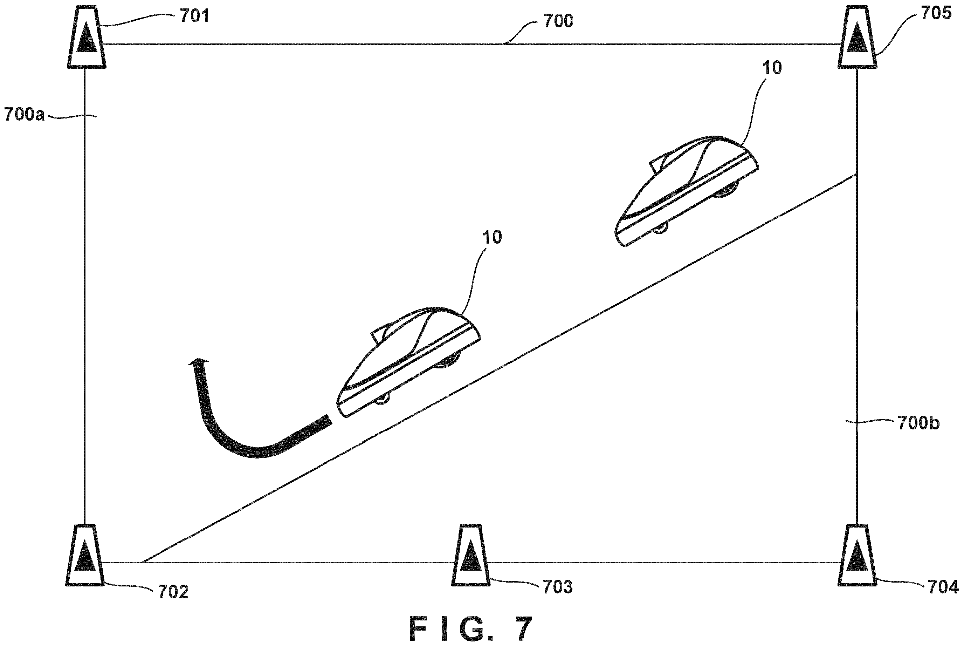

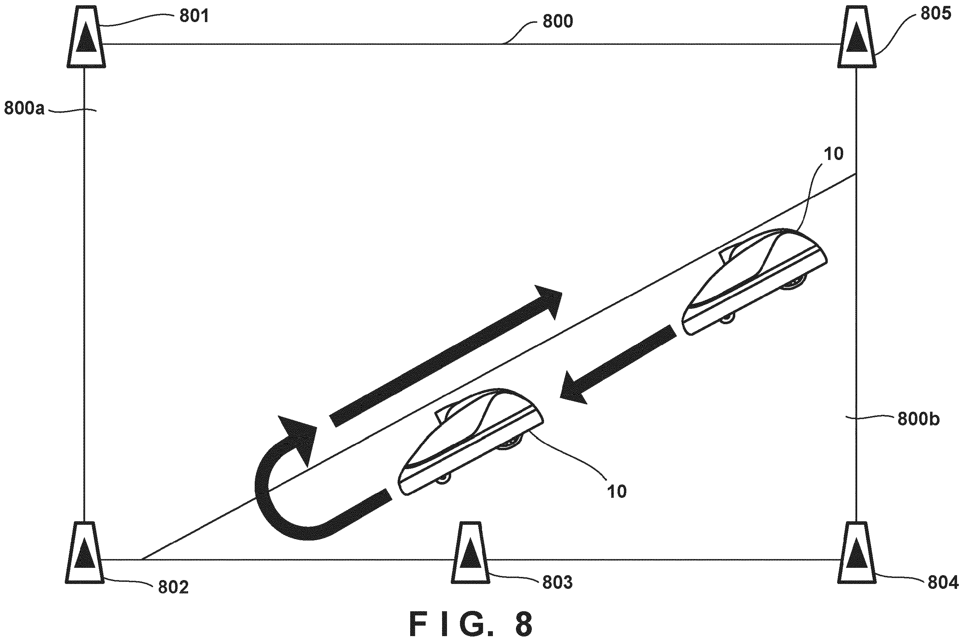

An example of a method of deciding the direction in a case in which a turn can be made to both the left or right will be described here. Fig. 7 shows a working area 700 defined by markers 701 to 705, like Fig. 6. The working area 700 includes a first working area 700a and a second working area 700b. The first working area 700a is an area where the working amount is larger than in the second working area 700b. "The working amount is large" means that, for example, the amount of lawn is large. "The working amount is small" means that, for example, the amount of lawn is small. In addition, if the working vehicle 10 is not a lawn mower but, for example, a snow remover, a golf ball retriever, or the like, an area with a large amount of accumulated snow is the area where the working amount is large, or an area with a lot of golf balls are distributed is the area where the working amount is large. It is determined which one of the left and right areas is the area with the large working amount, and control is performed to turn the working vehicle 10 to the determined area. For example, control is performed to turn the working vehicle 10 to the right side where the first working area 700a with the large working amount exists. Instead of turning to the right, the working vehicle 10 may turn to the right side until its direction becomes opposite to the traveling direction. For example, Fig. 8 shows a working area 800 defined by markers 801 to 805, like Fig. 7. The working area 800 includes a first working area 800a and a second working area 800b. The first working area 800a is an area where the working amount is larger than in the second working area 800b. As shown in Fig. 8, control is performed such that the working vehicle 10 turns to the right side where the first working area 800a exists with respect to the traveling direction, continues turning until the direction becomes opposite to the initial traveling direction, and then travels in the opposite direction. This makes it possible to reduce an unexecuted work (for example, an unmown lawn) and thus prevent the working vehicle 10 from deviating from the boundary of the working area and moving out while maintaining a high working efficiency.

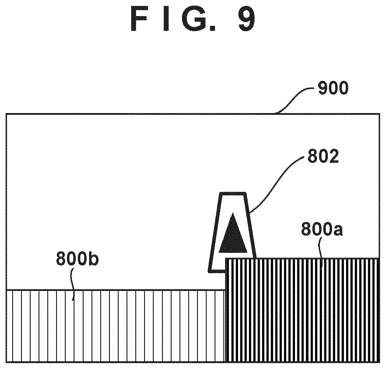

Note that a method of determining which working area has a large working amount will be described with reference to Fig. 9. Fig. 9 shows a captured image 900 captured by the camera unit 11. The captured image 900 is an image captured during the movement of the working vehicle 10 from the upper right side to the lower left side in Fig. 8. The captured image includes the marker 802, the first working area 800a, and the second working area 800b. If the working vehicle 10 is a lawn mower, the area with the large working amount is an area with a large amount of lawn. The area with a large amount of lawn and an area with a small amount of lawn have different color tones. The area with a large amount of lawn is dark green, and the area with a small amount of lawn is light green (for example, yellowish green). By analyzing the brightness value of the captured image, an area where a large amount of lawn in a dark color is distributed can be decided as the area with a large working amount. This allows the working vehicle 10 to turn to the working area with the large working amount. If the working vehicle 10 is a snow remover, an area where a large amount of snow is accumulated can be decided as the area with a large working amount by similarly analyzing the captured image. If the working vehicle 10 is a golf ball retriever, an area where a large number of golf balls are detected can be decided as the area with a large working amount by similarly analyzing the captured image.

In step S408, the ECU 44 determines whether to continue the processing. For example, if the work in the working area is completed, or the user powers off the working vehicle 10, the processing is ended. Otherwise, it is determined to continue the processing. Upon determining, in this step, to continue the processing, the process returns to step S401. On the other hand, upon determining to end the processing, the series of processes shown in Fig. 4 is ended.

In step S409, the ECU 44 controls the operation of the working vehicle 10 based on the captured image. For example, the ECU 44 can calculate and obtain information of the distance between the working vehicle 10 and an object (for example, a tree, a stone, or a rock in the working area) existing in front of the working vehicle 10 based on a plurality of captured images captured by the camera unit 11. The ECU 44 then controls the operation of the working vehicle 10 based on the distance information up to the object. If no obstacle exists in front, control may be performed to maintain the traveling speed and the traveling direction. After the processing of this step, the process returns to step S401. The processing shown in Fig. 4 has been described above.

Note that in the processing shown in Fig. 4, if no markers are detected from the captured image any more, that is, if the markers deviate from the detection range (NO in step S406), it is determined, in step S406, whether the working vehicle 10 is moving in the boundary direction of the working area. However, the processing of step S406 may be skipped. That is, if no markers are detected from the captured image any more (NO in step S406), it may be judged that there is a possibility that the working vehicle 10 immediately deviates from the boundary of the working area, and control of step S407 may be performed to avoid the deviation.

Also, in the processing shown in Fig. 4, an example in which if no markers are detected from the captured image any more, that is, if the markers deviate from the detection range (NO in step S406), the processing of step S407 is immediately performed after the processing of step S406 has been described. However, at least one of the traveling speed and the traveling direction of the working vehicle 10 may be controlled after the elapse of a predetermined time from deviation of the markers from the detection range. That is, the processing of step S407 may be performed when a predetermined time elapses after step S405 ends with "NO". This is because the working vehicle does not immediately reach the boundary of the working area even if it continues the work while traveling for a certain time after the markers are not detected any more. Since processing such as a turn or deceleration is not performed immediately, the work can be performed up to a point close to the boundary without deviating from the working area. Hence, since it is possible to prevent generation of an area where the work is not performed yet (since the lawn can be prevented from being unmown near the boundary), the working efficiency can be improved.

As described above, in this embodiment, an example in which if the markers deviate from the detection range, at least one of the traveling speed and the traveling direction of the autonomous work machine is controlled has been described. This makes it possible to continue a work without causing the autonomous work machine to deviate out of the working area.

### (Second Embodiment)

In this embodiment, control to be performed in a case in which a marker that should exist at a position cannot be detected for some reason will be described. For example, in a case in which a marker falls or its position moves due to the influence of a wind, an obstacle is installed in front of a marker, or a lawn grows and hides a marker, if a work is performed based on the marker, the work may be performed in an unintended working area. That is, there is a possibility that the working vehicle may deviate from the working area. In this embodiment, the arrangement information of each marker is stored in advance, and the consistency between the detection result of a marker and the arrangement information is determined. If these are not consistent, control is switched to an alternative position estimation method to control the operation of the working vehicle.

The configuration of a working vehicle according to this embodiment is the same as the configuration of the working vehicle 10 described in the first embodiment, and a detailed description thereof will be omitted. Note that a working vehicle 10 according to this embodiment holds, in a memory 44c in advance, arrangement information representing the arrangement positions of a plurality of markers that define a working area. It is determined whether the position of a marker detected from a captured image is consistent with the arrangement information. If these are not consistent, the position of the working vehicle 10 is estimated using a GPS sensor 48, and the operation of the working vehicle 10 is controlled based on the estimated position. Alternatively, the position of the working vehicle 10 is estimated using not the GPS sensor 48 but odometry using a wheel speed sensor 50, an angular velocity sensor 52, an acceleration sensor 54, and the like, and the operation of the working vehicle 10 is controlled based on the estimated position.

### <Processing>

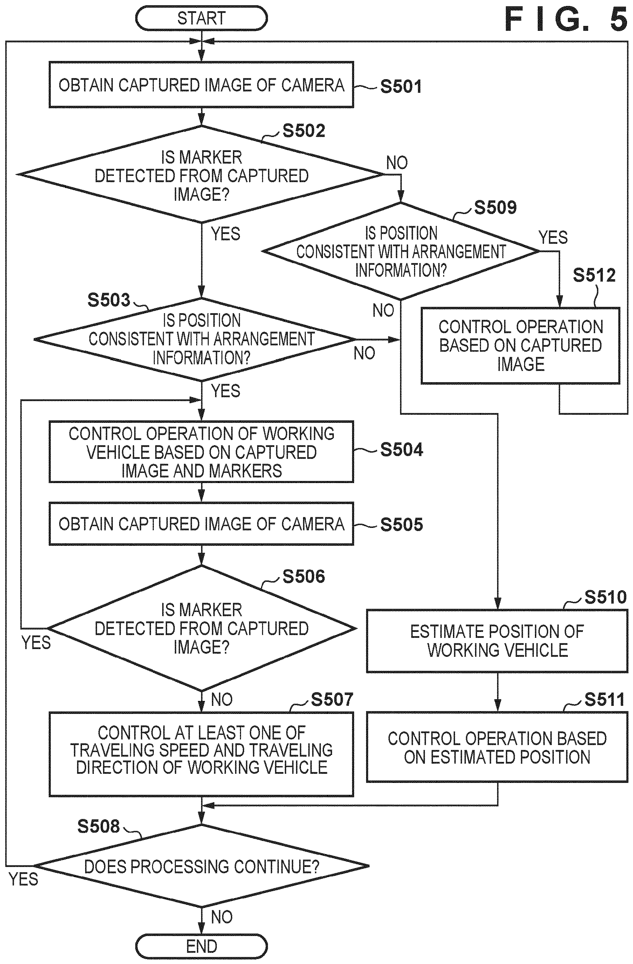

The procedure of processing executed by the working vehicle 10 according to this embodiment will be described with reference to the flowchart of Fig. 5. Processes of steps S501 and S502 are the same as the processes of steps S401 and S402 of Fig. 4. In addition, processes of steps S504 to S508 and S512 are the same as the processes of steps S403 to S405 and S407 to S409 of Fig. 4. Differences from the processing shown in Fig. 4 will mainly be described below.

In step S503, an ECU 44 determines consistency with the arrangement information of a marker held in the memory 44c in advance. More specifically, it is determined whether the position of the marker detected in step S502 and the arrangement information of the marker held in the memory 44c in advance are consistent. Upon determining that these are consistent, the process advances to step S504. On the other hand, upon determining that these are not consistent, the process advances to step S510.

In step S509, the ECU 44 determines consistency with the arrangement information of a marker held in the memory 44c in advance. More specifically, if no marker exists at a position represented by the arrangement information of the marker held in the memory 44c in advance (if the marker does not exist at a position where it should exist), it is determined that the position is not consistent with the arrangement information. Upon determining that these are consistent, the process advances to step S512. On the other hand, upon determining that these are not consistent, the process advances to step S510.

In step S510, the ECU 44 estimates the position of the working vehicle 10. The position may be estimated using the GPS sensor 48 or may be estimated by odometry using the wheel speed sensor 50, the angular velocity sensor 52, the acceleration sensor 54, and the like. If the marker does not exist at the position where it should exist, and the operation of the working vehicle 10 is controlled using the detected marker, the working vehicle may deviate from the originally intended working area. For this reason, the position of the working vehicle 10 is estimated using another position estimation method.

In step S511, the ECU 44 controls the operation of the working vehicle 10 based on the position of the working vehicle 10 estimated in step S510. The processing shown in Fig. 5 has been described above.

Note that in the processing shown in Fig. 5, an example in which the process of step S406 in Fig. 4 is omitted has been described. However, the process may be performed without being omitted.

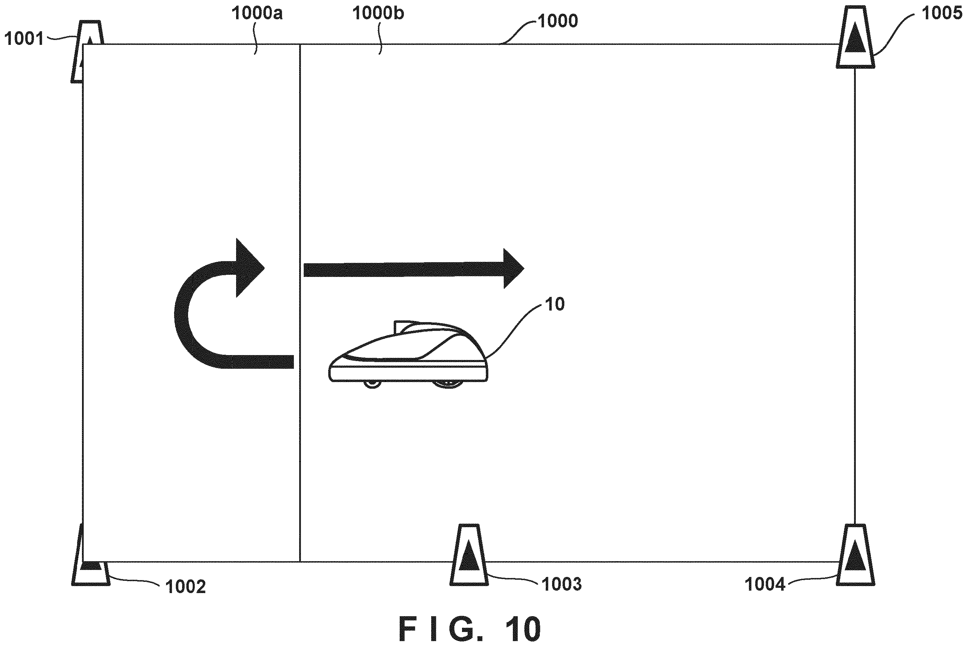

Fig. 10 shows a working area 1000 defined by markers 1001 to 1005. The working area 1000 includes a first working area 1000a and a second working area 1000b. The first working area 1000a is an area where the working amount is larger than in the second working area 1000b. As shown in Fig. 10, the first working area 1000a exists in the traveling direction of the working vehicle 10, and the working vehicle 10 is moving from the second working area 1000b in the direction in which the first working area 1000a exists. The first working area 1000a is an area where, for example, the amount of lawn is large, and the marker 1001 and the marker 1002 cannot be detected. In this case, it is determined, based on the arrangement information of the markers held in advance, that the markers do not exist at the positions where they should exist. Hence, in this case, step S502 ends with "NO", step S509 ends with "NO", and the process advances to step S510 to estimate the position of the working vehicle 10 using an alternative position estimation method. In step S511, a turning operation as shown in Fig. 10 is performed based on the estimated position. Alternatively, not a turn but a retreating operation may be performed.

As described above, in this embodiment, the consistency between the arrangement information of a marker held in advance and the detection result of the marker is determined. If these are not consistent, the position of the working vehicle is estimated using an alternative position estimation method, and the operation of the working vehicle is controlled based on the estimation result.

Hence, even if the position of a detected marker moves due to a wind, or the like, it is possible to prevent the working vehicle from deviating from the working area. Alternatively, if an obstacle exists in front of a marker, or a lawn grows to make a marker invisible, the marker cannot be detected. However, even in this case, the working vehicle can be prevented from deviating from the working area.

The present invention is defined in the appended claims.

## Claims

1. An autonomous work machine that performs a work in a working area (600) defined by a plurality of markers (601 - 605), comprising:
a camera (11);
detection means (44) for detecting one or more markers (601 - 605) from a captured image of the camera; and
control means (44) for, in a case where the one or more markers (601 - 605) deviate from a detection range of the detection means (44), controlling at least one of a traveling speed and a traveling direction of the autonomous work machine (10)
**characterized by** further comprising:
setting means (44) for, in a case where a plurality of markers (601 - 605) are detected by the detection means (44), setting a virtual wire representing a line between adjacent markers (601 - 605),
wherein the control means (44) recognizes the virtual wire set by the setting means (44) as a boundary of the working area (600), and controls at least one of the traveling speed and the traveling direction of the autonomous work machine (10) such that the autonomous work machine (10) does not deviate out of the working area (600) across the virtual wire.

2. The autonomous work machine according to claim 1, **characterized in that** the control means (44) controls at least one of the traveling speed and the traveling direction of the autonomous work machine (10) after an elapse of a predetermined time from deviation of the one or more markers (601 - 605) from the detection range of the detection means(44).

3. The autonomous work machine according to claim 1 or 2, **characterized by** further comprising:
estimation means (48, 50, 52, 54) for estimating a position of the autonomous work machine (10);
storage means (44c) for storing position information including positions where the plurality of markers (601 - 605) are placed; and
determination means (44) for determining whether the position information and a detection result by the detection means (44) are consistent,
wherein in a case where the determination means (44) determines that the position information and the detection result are not consistent, the control means (44) controls at least one of the traveling speed and the traveling direction of the autonomous work machine (10) based on an estimation result by the estimation means(48, 50, 52, 54).

4. The autonomous work machine according to claim 3, **characterized in that** the estimation means (48, 50, 52, 54) performs the estimation using one of odometry (50, 52, 54), a satellite positioning system (48), and an image capturing result of the camera (11).

5. The autonomous work machine according to claim 1 or 2, **characterized by** further comprising:
storage means (44c) for storing position information including positions of the plurality of markers (601 - 605); and
determination means (44) for determining whether the position information and a detection result by the detection means (44) are consistent,
wherein in a case where the determination means determines that the position information and the detection result are consistent, and the one or more markers (601 - 605) deviate from the detection range of the detection means (44), the control means (44) controls at least one of the traveling speed and the traveling direction of the autonomous work machine (10).

6. The autonomous work machine according to claim 1 or 2, **characterized by** further comprising direction determination means (44) for determining whether the autonomous work machine (10) is moving in a boundary direction of the working area (600),
wherein in a case where the direction determination means (44) determines that the autonomous work machine (10) is moving in the boundary direction, and the one or more markers (601 - 605) deviate from the detection range of the detection means (44), the control means (44) controls at least one of the traveling speed and the traveling direction of the autonomous work machine (10).

7. The autonomous work machine according to any one of claims 1 to 6, **characterized in that** in a case where a plurality of markers (601 - 605) are detected by the detection means (44) and all of the plurality of markers (601 - 605) deviate from the detection range, the control means (44) controls at least one of the traveling speed and the traveling direction of the autonomous work machine (10).

8. The autonomous work machine according to any one of claims 1 to 6, **characterized in that** in a case where a plurality of markers (601 - 605) are detected by the detection means(44) and at least one of the plurality of markers (601 - 605) deviates from the detection range, the control means (44) controls at least one of the traveling speed and the traveling direction of the autonomous work machine (10).

9. The autonomous work machine according to claim 8, **characterized in that** in a case where two markers (601 - 605) are detected by the detection means (44) and one of the two markers (601 - 605) deviates from the detection range, the control means (44) controls at least one of the traveling speed and the traveling direction of the autonomous work machine (10).

10. The autonomous work machine according to any one of claims 1 to 6, **characterized in that** in a case where the one or more markers (601 - 605) cannot be recognized due to the proximity of the autonomous work machine (10) to the one or more markers (601 - 605), the control means (44) controls at least one of the traveling speed and the traveling direction of the autonomous work machine (10).

11. A control method of an autonomous work machine that performs a work in a working area (600) defined by a plurality of markers (601 - 605), comprising:
a detection step of detecting one or more markers (601 - 605) from a captured image of a camera (11) provided in the autonomous work machine (10); and
a control step of, in a case where the one or more markers (601 - 605) deviate from a detection range in the detection step, controlling at least one of a traveling speed and a traveling direction of the autonomous work machine (10),
**characterized by** further comprising:
a setting step of, in a case where a plurality of markers (601 - 605) are detected in the detection step, setting a virtual wire representing a line between adjacent markers (601 - 605),
wherein during the control step, the virtual wire set in the setting step is recognized as a boundary of the working area (600), and at least one of the traveling speed and the traveling direction of the autonomous work machine (10) is controlled such that the autonomous work machine (10) does not deviate out of the working area (600) across the virtual wire.

12. A program configured to cause a computer to execute a control method of an autonomous work machine (10) according to claim 11.

## Patentansprüche

1. Eine autonome Arbeitsmaschine, die in einem durch eine Mehrzahl an Markierungen (601 - 605) definierten Arbeitsbereich (600) eine Arbeit durchführt, aufweisend:
eine Kamera (11);
eine Erfassungseinrichtung (44) zum Erfassen einer oder mehrerer Markierungen (601 - 605) in einem von der Kamera aufgenommenen Bild; und
eine Steuereinrichtung (44), um in einem Fall, in dem die eine oder die Mehrzahl an Markierungen (601 - 605) von einem Erfassungsbereich der Erfassungseinrichtung (44) abweichen, die Fahrgeschwindigkeit und/oder die Fahrtrichtung der autonomen Arbeitsmaschine (10) zu steuern,
**dadurch gekennzeichnet, dass** sie ferner aufweist:
eine Setzeinrichtung (44) zum Setzen eines zwischen benachbarten Markierungen (601 - 605) eine Linie darstellenden virtuellen Drahtes, wenn eine Mehrzahl an Markierungen (601 - 605) durch die Erfassungseinrichtung (44) erfasst werden,
wobei die Steuereinrichtung (44) den durch die Setzeinrichtung (44) gesetzten virtuellen Draht als eine Grenze des Arbeitsbereichs (600) erkennt und Fahrgeschwindigkeit und/oder Fahrtrichtung der autonomen Arbeitsmaschine (10) so steuert, dass die autonome Arbeitsmaschine (10) den Arbeitsbereich (600) durch Überqueren des virtuellen Drahtes nicht verlässt.

2. Die autonome Arbeitsmaschine nach Anspruch 1, **dadurch gekennzeichnet, dass** die Steuereinrichtung (44) die Fahrgeschwindigkeit und/oder die Fahrtrichtung der autonomen Arbeitsmaschine (10) nach Ablauf einer vorbestimmten Zeitspanne ab Abweichen der einen oder der Mehrzahl an Markierungen (601 - 605) aus dem Erfassungsbereich der Erfassungseinrichtung (44) steuert.

3. Die autonome Arbeitsmaschine nach Anspruch 1 oder 2, **dadurch gekennzeichnet, dass** sie ferner aufweist:
eine Schätzeinrichtung (48, 50, 52, 54) zum Schätzen einer Position der autonomen Arbeitsmaschine (10);
eine Speichereinrichtung (44c) zum Speichern von Positionsinformationen einschließlich der Positionen, an denen die Mehrzahl an Markierungen (601 - 605) platziert sind; und
eine Bestimmungseinrichtung (44) zum Bestimmen, ob die Positionsinformationen und ein durch die Erfassungseinrichtung (44) erhaltenes Erfassungsergebnis konsistent sind,
wobei in einem Fall, in dem die Bestimmungseinrichtung (44) bestimmt, dass die Positionsinformationen und das Erfassungsergebnis nicht konsistent sind, die Steuereinrichtung (44) Fahrgeschwindigkeit und/oder Fahrtrichtung der autonomen Arbeitsmaschine (10) auf der Grundlage eines Schätzergebnisses durch die Schätzeinrichtung (48,50,52,54) steuert.

4. Die autonome Arbeitsmaschine nach Anspruch 3, **dadurch gekennzeichnet, dass** die Schätzeinrichtung (48, 50, 52, 54) die Schätzung unter Verwendung von Odometrie (50, 52, 54) eines Satellitenpositionierungssystems (48) sowie eines Bildaufnahmeergebnisses der Kamera (11) durchführt.

5. Die autonome Arbeitsmaschine nach Anspruch 1 oder 2, **dadurch gekennzeichnet, dass** sie ferner aufweist:
eine Speichereinrichtung (44c) zum Speichern von Positionsinformationen einschließlich der Positionen der Mehrzahl an Markierungen (601 - 605); und
eine Bestimmungseinrichtung (44) zum Bestimmen, ob die Positionsinformationen und ein durch die Erfassungseinrichtung (44) erhaltenes Erfassungsergebnis konsistent sind,
wobei in einem Fall, in dem die Bestimmungseinrichtung bestimmt, dass die Positionsinformationen und das Erfassungsergebnis konsistent sind, und die eine oder die Mehrzahl an Markierungen (601 - 605) von dem Erfassungsbereich der Erfassungseinrichtung (44) abweichen, die Steuereinrichtung (44) Fahrgeschwindigkeit und/oder Fahrtrichtung der autonomen Arbeitsmaschine (10) steuert.

6. Die autonome Arbeitsmaschine nach Anspruch 1 oder 2, **dadurch gekennzeichnet, dass** sie ferner eine Richtungsbestimmungseinrichtung (44) aufweist, um zu bestimmen, ob sich die autonome Arbeitsmaschine (10) in Richtung des Randes des Arbeitsbereichs (600) bewegt,
wobei in einem Fall, in dem die Richtungsbestimmungseinrichtung (44) bestimmt, dass sich die autonome Arbeitsmaschine (10) in Richtung des Randes bewegt, und die eine oder die Mehrzahl an Markierungen (601 - 605) von dem Erfassungsbereich der Erfassungseinrichtung (44) abweichen, die Steuereinrichtung (44) Fahrgeschwindigkeit und/oder Fahrtrichtung der autonomen Arbeitsmaschine (10) steuert.

7. Die autonome Arbeitsmaschine nach einem der Ansprüche 1 bis 6, **dadurch gekennzeichnet, dass** in einem Fall, in dem durch die Erfassungseinrichtung eine Mehrzahl an Markierungen (601 - 605) (44) erfasst wird und alle der Mehrzahl an Markierungen (601 - 605) von dem Erfassungsbereich abweichen, die Steuereinrichtung (44) Fahrgeschwindigkeit und/oder Fahrtrichtung der autonomen Arbeitsmaschine (10) steuert.

8. Die autonome Arbeitsmaschine nach einem der Ansprüche 1 bis 6, **dadurch gekennzeichnet, dass** in einem Fall, in dem eine Mehrzahl an Markierungen (601 - 605) durch die Erfassungseinrichtung (44) erfasst wird und mindestens eine der Mehrzahl an Markierungen (601 - 605) von dem Erfassungsbereich abweicht, die Steuereinrichtung (44) Fahrgeschwindigkeit und/oder Fahrtrichtung der autonomen Arbeitsmaschine (10) steuert.

9. Die autonome Arbeitsmaschine nach Anspruch 8, **dadurch gekennzeichnet, dass** in einem Fall, in dem zwei Markierungen (601 - 605) durch die Erfassungseinrichtung (44) erfasst werden und eine der beiden Markierungen (601 - 605) von dem Erfassungsbereich abweicht, die Steuereinrichtung (44) Fahrgeschwindigkeit und/oder Fahrtrichtung der autonomen Arbeitsmaschine (10) steuert.

10. Die autonome Arbeitsmaschine nach einem der Ansprüche 1 bis 6, **dadurch gekennzeichnet, dass** in einem Fall, in dem die eine oder die Mehrzahl an Markierungen (601 - 605) aufgrund der Nähe der autonomen Arbeitsmaschine (10) zu der einen oder der Mehrzahl an Markierungen (601 - 605) nicht erkannt werden können, die Steuereinrichtung (44) Fahrgeschwindigkeit und/oder Fahrtrichtung der autonomen Arbeitsmaschine (10) steuert.

11. Ein Verfahren zur Steuerung einer autonomen Arbeitsmaschine, die in einem durch eine Mehrzahl an Markierungen (601 - 605) definierten Arbeitsbereich (600) eine Arbeit ausführt, aufweisend:
einen Erfassungsschritt zum Erfassen einer oder mehrerer Markierungen (601 - 605) eines von der Kamera (11) der autonomen Arbeitsmaschine (10) aufgenommenen Bildes; und
einen Steuerungsschritt zum Steuern einer Fahrgeschwindigkeit und/oder einer Fahrtrichtung der autonomen Arbeitsmaschine (10) in einem Fall, in dem in dem Erfassungsschritt eine oder mehrere Markierungen (601 - 605) von einem Erfassungsbereich abweichen,
**dadurch gekennzeichnet, dass** es ferner aufweist:
einen Setzschritt zum Setzen eines virtuellen, zwischen benachbarten Markierungen (601 - 605) eine Linie darstellenden Drahtes, in einem Fall, in dem in dem Erfassungsschritt eine Mehrzahl an Markierungen (601 - 605) erfasst werden,
wobei während des Steuerungsschritts der virtuelle, in dem Setzschritt gesetzte Draht als eine Grenze des Arbeitsbereichs (600) erkannt werden, und Fahrgeschwindigkeit und/oder Fahrtrichtung der autonomen Arbeitsmaschine (10) so gesteuert wird, dass die autonome Arbeitsmaschine (10) nicht durch Überfahren des virtuellen Drahtes den Arbeitsbereich (600) verlässt.

12. Ein Programm, das so ausgebildet ist, dass es einen Computer veranlasst, ein Steuerungsverfahren für eine autonome Arbeitsmaschine (10) nach Anspruch 11 auszuführen.

## Revendications

1. Machine de travail autonome qui réalise un travail dans une zone de travail (600) définie par une pluralité de marqueurs (601 - 605), comprenant :
une caméra (11) ;
un moyen de détection (44) pour détecter un ou plusieurs marqueurs (601 - 605) à partir d'une image capturée de la caméra ; et
un moyen de commande (44) pour commander, dans le cas où les un ou plusieurs marqueurs (601- 605) s'écartent d'une plage de détection du moyen de détection (44), au moins l'une d'une vitesse de déplacement et d'une direction de déplacement de la machine de travail autonome (10)
**caractérisée en ce qu'**elle comprend en outre :
un moyen de définition (44) pour définir, dans le cas où une pluralité de marqueurs (601 - 605) sont détectés par le moyen de détection (44), un fil virtuel représentant une ligne entre des marqueurs (601 - 605) adjacents,
dans laquelle le moyen de commande (44) reconnaît le fil virtuel défini par le moyen de définition (44) comme une limite de la zone de travail (600), et commande au moins l'une de la vitesse de déplacement et de la direction de déplacement de la machine de travail autonome (10) de sorte que la machine de travail autonome (10) ne s'écarte pas de la zone de travail (600) à travers le fil virtuel.

2. Machine de travail autonome selon la revendication 1, **caractérisée en ce que** le moyen de commande (44) commande au moins l'une de la vitesse de déplacement et de la direction de déplacement de la machine de travail autonome (10) après un écoulement d'un temps prédéterminé à partir de l'écartement des un ou plusieurs marqueurs (601 - 605) de la plage de détection du moyen de détection (44).

3. Machine de travail autonome selon la revendication 1 ou 2, **caractérisée en ce qu'**elle comprend en outre :
un moyen d'estimation (48, 50, 52, 54) pour estimer une position de la machine de travail autonome (10) ;
un moyen de stockage (44c) pour stocker des informations de position comportant des positions où la pluralité de marqueurs (601 - 605) sont placés ; et
un moyen de détermination (44) pour déterminer si les informations de position et un résultat de détection par le moyen de détection (44) sont cohérentes,
dans laquelle dans le cas où le moyen de détermination (44) détermine que les informations de position et le résultat de détection ne sont pas cohérents, le moyen de commande (44) commande au moins l'une de la vitesse de déplacement et de la direction de déplacement de la machine de travail autonome (10) sur la base d'un résultat d'estimation par le moyen d'estimation (48, 50, 52, 54).

4. Machine de travail autonome selon la revendication 3, **caractérisée en ce que** le moyen d'estimation (48, 50, 52, 54) réalise l'estimation en utilisant l'un(e) de l'odométrie (50, 52, 54), d'un système de positionnement par satellite (48), et d'un résultat de capture d'image de la caméra (11).

5. Machine de travail autonome selon la revendication 1 ou 2, **caractérisée en ce qu'**elle comprend en outre :
un moyen de stockage (44c) pour stocker des informations de position comportant les positions de la pluralité de marqueurs (601 - 605) ; et
un moyen de détermination (44) pour déterminer si les informations de position et un résultat de détection par le moyen de détection (44) sont cohérents,
dans laquelle dans le cas où le moyen de détermination détermine que les informations de position et le résultat de détection sont cohérents, et les un ou plusieurs marqueurs (601 - 605) s'écartent de la plage de détection du moyen de détection (44), le moyen de commande (44) commande au moins l'une de la vitesse de déplacement et de la direction de déplacement de la machine de travail autonome (10).

6. Machine de travail autonome selon la revendication 1 ou 2, **caractérisée en ce qu'**elle comprend en outre un moyen de détermination de direction (44) pour déterminer si la machine de travail autonome (10) se déplace dans une direction de limite de la zone de travail (600),
dans laquelle dans le cas où le moyen de détermination de direction (44) détermine que la machine de travail autonome (10) se déplace dans la direction de limite, et les un ou plusieurs marqueurs (601 - 605) s'écartent de la plage de détection du moyen de détection (44), le moyen de commande (44) commande au moins l'une de la vitesse de déplacement et de la direction de déplacement de la machine de travail autonome (10).

7. Machine de travail autonome selon l'une quelconque des revendications 1 à 6, **caractérisée en ce que** dans le cas où une pluralité de marqueurs (601 - 605) sont détectés par le moyen de détection (44) et la totalité de la pluralité de marqueurs (601- 605) s'écartent de la plage de détection, le moyen de commande (44) commande au moins l'une de la vitesse de déplacement et de la direction de déplacement de la machine de travail autonome (10).

8. Machine de travail autonome selon l'une quelconque des revendications 1 à 6, **caractérisée en ce que** dans le cas où une pluralité de marqueurs (601 - 605) sont détectés par le moyen de détection (44) et au moins l'un de la pluralité de marqueurs (601 - 605) s'écarte de la plage de détection, le moyen de commande (44) commande au moins l'une de la vitesse de déplacement et de la direction de déplacement de la machine de travail autonome (10).

9. Machine de travail autonome selon la revendication 8, **caractérisée en ce que** dans le cas où deux marqueurs (601 - 605) sont détectés par le moyen de détection (44) et l'un des deux marqueurs (601 - 605) s'écarte de la plage de détection, le moyen de commande (44) commande au moins l'une de la vitesse de déplacement et de la direction de déplacement de la machine de travail autonome (10).

10. Machine de travail autonome selon l'une quelconque des revendications 1 à 6, **caractérisée en ce que** dans le cas où les un ou plusieurs marqueurs (601 - 605) ne peuvent pas être reconnus en raison de la proximité de la machine de travail autonome (10) aux un ou plusieurs marqueurs (601 - 605), le moyen de commande (44) commande au moins l'une de la vitesse de déplacement et de la direction de déplacement de la machine de travail autonome (10).

11. Procédé de commande d'une machine de travail autonome qui réalise un travail dans une zone de travail (600) définie par une pluralité de marqueurs (601 - 605), comprenant :
une étape de détection pour détecter un ou plusieurs marqueurs (601 - 605) à partir d'une image capturée d'une caméra (11) prévue dans la machine de travail autonome (10) ; et
une étape de commande pour commander, dans le cas où les un ou plusieurs marqueurs (601 - 605) s'écartent d'une plage de détection lors de l'étape de détection, au moins l'une d'une vitesse de déplacement et d'une direction de déplacement de la machine de travail autonome (10),
**caractérisé en ce qu'**il comprend en outre :
une étape de définition pour définir, dans le cas où une pluralité de marqueurs (601 - 605) sont détectés lors de l'étape de détection, un fil virtuel représentant une ligne entre des marqueurs (601 - 605) adjacents,
dans lequel pendant l'étape de commande, le fil virtuel défini lors de l'étape de définition est reconnu comme une limite de la zone de travail (600), et au moins l'une de la vitesse de déplacement et de la direction de déplacement de la machine de travail autonome (10) est commandée de sorte que la machine de travail autonome (10) ne s'écarte pas de la zone de travail (600) à travers le fil virtuel.

12. Programme configuré pour amener un ordinateur à exécuter un procédé de commande d'une machine de travail autonome (10) selon la revendication 11.
